# EUROPÄISCHE PATENTSCHRIFT

(11) **EP 0 388 363 B1**
(45) Veröffentlichungstag und Bekanntmachung des Hinweises auf die Patenterteilung: **02.06.1993**
(21) Anmeldenummer: 90810202.3
(22) Anmeldetag: 14.03.1990
(51) Int. Cl.: B60D 1/46

(54) **Anhängevorrichtung für Fahrzeuge**
Trailerhitch for vehicles
Attelage pour véhicules

(30) Priorität: 15.03.1989 CH 951/89; 11.11.1989 CH 4056/89
(43) Veröffentlichungstag der Anmeldung: 19.09.1990
(73) Patentinhaber: Fenner, Werner, CH-5425 Schneisingen (CH)
(72) Erfinder: Fenner, Werner, CH-5425 Schneisingen (CH)

(56) Entgegenhaltungen:
- EP-A- 0 016 317
- EP-A- 0 095 443
- EP-A- 0 215 443
- F.Strasser: "10 ways to change straight-line direction" 1965, Mc Graw-Hill, New York

## Beschreibung

Die Erfindung betrifft eine Anhängevorrichtung für Fahrzeuge nach dem Oberbegriff des Patentanspruches 1.

Solche Anhängevorrichtungen werden vornehmlich an Traktoren verwendet und erlauben im landwirtschaftlichen Betrieb den wechselweisen Einsatz verschiedenartiger Anhänger und unterschiedlicher Anhängedeichseln.

Bei der nach EP-A-0 016 317 ausgebildeten Anhängevorrichtung sind die seitlich in Verankerungsbohrungen der Führungselemente einlegbaren Sperrbolzen mittels einer Schwenkbewegung eines um eine zur Fahrtrichtung parallele Achse betätigbar.

Die dem Oberbegriff entsprechende EP-B-0 095 443 vermittelt eine Anhängevorrichtung für Fahrzeuge, bei der die den seitlichen Führungselementen zugeordneten Sperrbolzen mittels einem um eine vertikale Achse schwenkbaren Hebel antreibbar sind. Dieses Prinzip weicht von demjenigen nach der EP-A-0 016 317 nur insoweit ab, als dass die Achse des Betätigungsorgans um 90° versetzt angeordnet ist und die Rückstellbewegung der Sperrbolzen in die Verankerungsbohrungen mittels Zugfedern erfolgt.

Durch die Schwenkhebeltetätigung entstehen Klemm- und Scherstellen, die bei den Bedienenden dieser Anhängevorrichtung zu Verletzungen führen und deshalb von technischen Ueberwachungsdiensten beanstandet und mit Auflagen zu Schutzmassnahmen verurteilt werden. Ueberdies erschwert die Schwenkbewegung des Betätigungsorgans beim Lösen der Sperrbolzen aus den Verankerungsbohrungen die wenigstens annähernd senkrechte Verstellbewegung zur Höhenveränderung der Tragplatte des Kupplungsorgans. Da sich der Handgriff an dem Betätigungsorgan seitlich entfernt von der vertikalen Schwerpunktsachse der Tragplatte befindet, insbesondere bei der Ausführung nach der EP-B-0 095 443, und durch die hohe Verschmutzungsneigung an der Anhängevorrichtung ein zusätzliches Hemmnis zu überwinden ist, bedarf es einer besonderen Anstrengung, die Tragplatte mit einer Hand zu verstellen. Diese Situation erhöht die Unfallgefahr und verlangt von dem Bedienenden grösste Aufmerksamkeit bei engen Platzververhältnissen. Beide Anhängevorrichtungen sind beschränkt wartungsfreundlich und mit Verschleisseigenschaftn belastet.

Diese Unzulänglichkeiten haben bei der vorliegenden Erfindung zur Aufgabe geführt, eine Anhängevorrichtung fürFahrzeuge zu schaffen, die unter Vermeidung der oben aufgeführten Nachteile leichter bedienbar ist und sich durch einen Weiterausbau zur Verwendung selbsttätig steuerbarer Elemente eignet.

Erfindungsgemäss wird diese Aufgabe nach dem kennzeichnenden Teil des Patentanspruches 1 gelöst.

Die Antriebsstange kan somit in der hochgezogenen wie in der hinuntergedrückten Stellung arretiert werden.

Zur Arretierung der Antriebsstange in der Stellung entriegelter Sperrbolzen kann eine die Antriebsstange und die Tragplatte verbindbare, formschlüssige Verschlussvorrichtung, wie beispielsweise ein durch Verdrehen der Antriebsstange wirkender Bajonettverschluss oder ein an der Tragplatte vorgesehener, in die Antriebsstange eingreifender Riegel oder dgl. bekannte Vorrichtungen verwendet werden.

Auch ein kraftschlüssiger Verschluss zwischen Antriebsstange und Tragplatte des Kupplungsorgans kann durch einen über der Tragplatte angeordneten bzw. an dieser befestigten Haltebügel die Arretierung bewirken. Dieser Haltebügel ist gleichzeitig als Griff zum Hochziehen oder Hinunterstossen der Tragplatte vorgesehen.

Zu diesem Zweck ist der Haltebügel an der Oberseite der Tragplatte befestigt, wobei beide Teile vorteilhaft gemeinsam als ein Gussteil herzustellen sind.

Der Abstand zwischen Haltebügel und Tragplattenoberseite entspricht wenigstens annähernd dem Mass der Betätigungsstrecke der Antriebsstange bei der Entnahme der Sperrbolzen aus den Verankerungsbohrungen.

Werden die Sperrbolzen durch Hochziehen der Antriebsstange aus den Führungselementen entriegelt, dann erweist es sich als vorzüglich, wenn die einseitige Erstreckung des Betätigungsgriffes kürzer ist als die Grifflänge an dem Haltebügel. Diese Ausgestaltung hat ihre ganz besondere Bedeutung bei der Verstellung der Anhängevorrichtung, indem der Haltegriff vorerst durch einen oder zwei Finger einer Hand untergriffen, von diesen hochgezogen und zusammen mit dem Haltebügel von den übrigen Fingern umfasst wird, derart, dass nun die Tragplatte in ihrer Höhenlage verstellt werden kann. Hat die Tragplatte die gewählte Position errreicht, dann wird der zuvor angehobene Betätigungshebel losgelassen und die Tragplatte, sofern sie ihre endgültige Position noch nicht einnimmt, mit allen Fingern der Hand in die Verankerungsposition bewegt. Die Sperrbolzen werden mittels Federkraft selbsttätig in die Verankerungsbohrungen geschoben.

Selbstverständlich könnte der gleiche Vorgang durch eine über den Haltebügel vorstehende Antriebsstange erreicht werden, indem die Antriebsstange mittels einer Stossbewegung nach unten versetzt wird. Auf diese Weise würde sich der Druck auf die Antriebsstange insoweit negativ auswirken, als dadurch die Reibung der Sperrbolzen in den Verankerungsbohrungen erhöht und der Verstellvorgang erschwert wird.

Diese entscheidenden mit der Funktionstauglichkeit der Anhängevorrichtung verbundenen Konstruktionsmerkmale gewährleisten eine einfache, einhändige Bedienung.

Zur Uebertragung der Betätigungskraft von der Antriebsstange auf die Sperrbolzen erweisen sich die nachfolgenden Uebertragungsmechanismen im Rahmen dieser Erfindung als geeignet.

Effizient und betriebssicher erweist sich eine Einrichtung, bei der die als Betätigungsorgan vorgesehene Antriebsstange mit einer um eine horizontale Achse drehbaren, die Sperrbolzen mittels Lenkern antreibenden Scheibe verbunden ist. Das auf die Scheibe aufzubringende Drehmoment lässt sich durch das Betätigungsorgan mühelos bewerkstelligen. Die als Lenker ausgebildeten Verbindungselemente sind einerseits am Umfang der Scheibe und andererseits an dem nach innen ragenden Ende des Sperrbolzens angelenkt. Die Bewegung der Sperrbolzen wird weihgehend vom Weg der Anlenkstelle durch die Drehbewegung der Scheibe und deren Durchmesser bestimmt.

Die Antiebsverbindung zwischen Antriebsstange und drehbarer Scheibe erfolgt vorteilhaft mit einem an der Antriebsstange befestigten Antriebsnocken, der in eine schlitzartige Ausnehmung in der Scheibe eingreift. Diese Ausnehmung könnte sowohl innerhalb wie auch als eine nach aussen offene Ausnehmung angeordnet bzw. ausgebildet sein. Durch die Drehbewegung der Scheibe die sich mit der linearen Bewegung der Antriebsstange schneidet bedarf es einer länglichen Ausnehmung, die sich gegenüber dem Antriebsnocken verschiebt, und die vorteilhaft etwa in radialer Richtung zur Drehachse der Scheibe aus verläuft.

Als vorzüglich erweist sich eine Anordnung der Lenker an der Scheibe, wenn der Radialabstand der Anlenkstelle der Lenker von der Drehachse der Scheibe grösser ist als der Radialabstand des Antriebsnockens von der Drehachse der Scheibe. Dadurch lässt sich die Antriebskraft an der Antriebsstange über eine Drehbewegung mittels Lenkern auf die Sperrbolzen übertragen.

Zur optimalen Ausnutzung der Sperrbolzenlager bzw. zugunsten einer kompakten Konstruktion im Bereich der Kraftumlenkung ist es vorteilhaft, wenn die Lenker an den Sperrbolzen innerhalb einer stirnseitig vorgesehenen Nute gelagert sind.

Die rechtwinklig zur Achse der Antriebsstange vorgesehene Drehachse der Scheibe ist im Sinne einer Vereinfachung dieser Antriebsverbindung zu der Antriebsstange seitlich versetzt angeordnet.

Im Interesse einer günstigen Verteilung des Antriebsmechanismus ist die Drehachse der Scheibe wenigstens annähernd mittig in der Quererstreckung der Tragplatte angeordnet.

Die Drehlagerung der Scheibe erfolgt auf einfache Weise mittels Büchse, deren Länge die Länge der Scheibenbohrung übersteht. Die Fixation der Lagerbüchse wird durch eine letztere axial durchdringende Schraube erreicht.

Die als Betätigungsorgan ausgebildete Antriebsstange kann alternativ mit einer V-förmig verlaufende Führungsnuten oder -schlitze aufweisenden und mit den Sperrbolzen antriebsverbundenen Steuerplatte gekoppelt sein. Diese Ausführungsform erfordert weniger Einzelteile; ihre Antriebsverbindung ist jedoch einem höheren Verschleiss und der Verschmutzung in den Führungsnuten ausgesetzt.

Zur Uebertragung der Betätigungskraft auf die Sperrbolzen sind zweckmässig Mitnehmerbolzen vorgesehen, die an den der Antriebsstange zugekehrten Enden der Sperrbolzen horizontal zur Seite abstehen und in die Führungsnuten wenigstens einer Stuerplatte formschlüssig eingreifen. Auch bei dieser Ausführungsform ist es möglich, die Enden der Sperrbolzen mit schlitzartigen Oeffnungen zu versehen oder die Steuerplatte an der Seite der Sperrbolzen mit diesen zu verbinden.

Zur Sicherung der Sperrbolzen in den Führungselementen können die divergierenden Enden der Führungsnuten oder -schlitze in der Steuerplatte mit parallel zur Bewegungsrichtung der Antriebsstange verlaufenden Fortsätzen ausgebildet sein.

Selbstverständlich könnten die Führungsnuten oder - schlitze in der Steuerplatte auch nach unten divergierend angeordnet sein, sodass beispielsweise durch Druck auf die Antriebsstange die Sperrbolzen aus den Verankerungsbohrungen der Führungselemente gezogen werden.

Weiterhin kann der Antriebsmechanismus durch einen die Antriebsstange mit den Sperrbolzen verbindenden, abgewinkelten Hebel ausgebildet sein, wobei die Hebel vorzugsweise über den Sperrbolzen gelagert sind und das freie Ende des einen Hebelarms mit der Antriebsstange und das freie Ende des anderen Hebelarms mit dem inneren Ende des Sperrbolzens schwenkbar verbunden ist.
Hier handelt es sich um eine weitere Antriebskonstruktion, die sich als einfach erweist.

Es erweist sich als vorteilhaft, wenn die Hebelarme des Hebels einen etwa rechten Winkel bilden.

Ebenso zweckmässig ist es, wenn der Hebel oberhalb der Sperrbolzen gelagert ist.

In Verbindung mit der Ausbildung des Betätigungsorgans erweist sich eine Anhängevorrichtung der eingangs genannten Art als geeignet, bei der die Antriebsstange durch ein mit den Sperrbolzen verbundenes Zahnstangengetriebe gekoppelt ist. Dieser Antriebsmechanismus erweist sich zur Uebertragung der Betätigungskraft auf die Sperrbolzen als zuverlässig und verschleissarm. Ein besonderer Unterhalt ist nicht erforderlich.

Dieses Antriebskonzept lässt sich in verschiedenen, leicht abweichenden Ausführungsarten gestalten. So kann u.a. die Antriebsstange mit einer Verzahnung (als Zahnstange ausgebildet) versehen werden, die mit einem um eine horizontale Achse gelagerten verzahnten Antriebsrad kämmt, das in eine Zahnstange an den Sperrbolzen eingreift.

Zu diesem Zweck sind die Sperrbolzen in Draufsicht betrachtet von dem mit der Antriebsstange zahnenden Teil beabstandet angeordnet. Diese Teillösung hat den Vorteil, dass als Antriebsrad ein Zahnrad zum Eingriff mit der Antriebsstange wie auch mit den Sperrbolzen verwendet werden kann.

Anstelle einer zweifachen Verzahnung der Antriebsstange und der Verwendung von zwei verzahnten Antriebsrädern sind die Sperrbolzen bezüglich ihrer Höhenlage um wenigstens annähernd das Mass des Teilkreisdurchmessers des Antriebsrades gegenseitig versetzt angeordnet.

Als einfache Art des Antriebes erweist es sich, wenn die Sperrbolzen nach innen gerichtete verzahnte Fortsätze aufweisen.

Es steht dem Konstrukteur auch wahlweise eine Ausführung zur Verfügung, bei der das Antriebsrad zwei koaxial benachbarte Zahnräder unterschiedlicher Teikreisdurchmesser aufweist. Diese Konstruktion eignet sich besonders dann, wenn aufgrund der möglichen Einbauhöhe ein beschränkter Weg der Antriebsstange verfügbar oder ein aufzubringendes hohes Drehmoment zur Bewegung der Sperrbolzen erforderlich ist.

Die erwähnten Antriebssysteme sind auch als spezieller Mischantrieb ausführbar, indem dass das mit den Fortsätzen der Sperrbolzen antriebsverbundene Zahnrad mit einer koaxial angeordneten, durch die Antriebsstange betätigbaren Antriebsscheibe drehfest verbunden ist.

In Anbetracht, der bei solchen Anhängevorrichtungen geforderten Sicherheit erweist es sich als zweckdienlich, wenn nach einer Veränderung der Tragplattenhöhe die Sperrbolzen automatisch in die Verriegelungsstellung in den Verankerungsbohrungen zurückgeführt werden. Zu dieser Massnahme bieten sich u.a. Federelemente an, die eine einseitige selbsttätige Wirkung ausüben können, d.h. das Betätigungsorgan ist von einer einseitig wirkenden Rückstellkraft beaufschlagbar ausgebildet.

Besonders günstig erweist sich der Einbau einer Druckfeder am freien Ende der Antriebsstange, wobei anschliessend an die Führung letzterer in der Tragplatte eine erweiterte zylindrische Bohrung vorgesehen ist, deren Ende mit der Führungsbohrung der Antriebsstange eine einseitige Abstützung der Druckfeder bildet, die mit ihrem anderen Ende an einer Schulter der Antriebsstange anliegt.

Selbstverständlich könnte die Druckfeder auch am unteren Ende der Tragplatte anliegen, wodurch jedoch die Antriebsstange nach unten vorstehen und durch Hindernisse beschädigt werden könnte.

Als Variante können anstelle der Antriebsstange auch die Sperrbolzen durch Druckfedern beaufschlagt werden; selbstverständlich kann bei richtiger Federauslegung auch nur ein Sperrbolzen federbeaufschlagt ausgebildet sein.

Die Anordnung der auf die Sperrbolzen einwirkenden Druckfedern erfolgt vorteilhaft in den Lagergehäusen der Sperrbolzen, wozu es notwendiger Einbauverhältnisse bedarf.

Anstelle eines die Druckfeder aufnehmenden Lagergehäuses könnte auch eine zapfenförmige Federführung an den inneren Enden der Sperrbolzen zur Fixation der Druckfedern die Rückstellkraft erzeugen. Hierzu eignen sich besonders die Zahnstangenantriebssysteme und die zweiarmige Hebellösung.

Es ist übrigens vorteilhaft, wenn die Antriebsstange in der Tragplatte formschlüssig geführt ist, damit sich Verdreh- oder Torsionskräfte nicht auf die anderen Elemente übertragen.

Zur Meidung von äusseren Einflüssen und gegen Unfälle im Gebrauch der Anhängevorrichtung ist das die Antriebsstange mit den Sperrbolzen verbindende Zwischengelege mit einer an der Tragplatte befestigten Abdeckhaube versehen.

Ein ganz entscheidender Vorteil bietet die erfindungsgemässe Anhängevorrichtung dadurch, dass das Betätigungsorgan mit einer einfach- oder doppelwirkenden Kolben - Zylinder - Einheit antriebsverbunden ist.

Zu diesem Zweck ist an der Oberseite der Tragplatte eine Befestigungsplatte angeordnet, die zur Aufnahme der Kolben - Zylinder - Einheit vorgesehen ist.

Die Kolben - Zylinder - Einheit ist von einem in die das Druckmedium führenden Leitungen geschalteten Ventil steuerbar, sodass es dem Fahrer eines Traktors oder anderen Zugfahrzeuges möglich sein wird, die Anhängevorrichtung aus der Kabine zu betätigen.

Nachstehend wird die Erfindung anhand den in der Zeichnung dargestellten Ausführungsbeispielen näher beschrieben. Es zeigen:
- Fig. 1: eine Ansicht einer Ausführungsform der erfindungsgemässen Anhängevorrichtung,
- Fig. 2: einen Querschnitt nach der Linie II - II in Fig. 1,
- Fig. 3: eine auszugsweise Darstellung an der Oberseite einer Tragplatte der erfindungsgemässen Anhängevorrichtung,
- Fig. 4: eine Ansicht einer alternativen Ausführungsform der erfindungsgemässen Anhängevorrichtung,
- Fig. 5: einen Querschnitt nach der Linie V - V in Fig. 4,
- Fig. 6: eine Ansicht einer weiteren Ausführungsform der erfindungsgemässen Anhängevorrichtung,
- Fig. 7: eine Ansicht einer weiteren alternativen Ausführungsform der erfindungsgemässen Anhängevorrichtung und
- Fig. 8: einen Querschnitt nach der Linie VIII - VIII in Fig. 7.

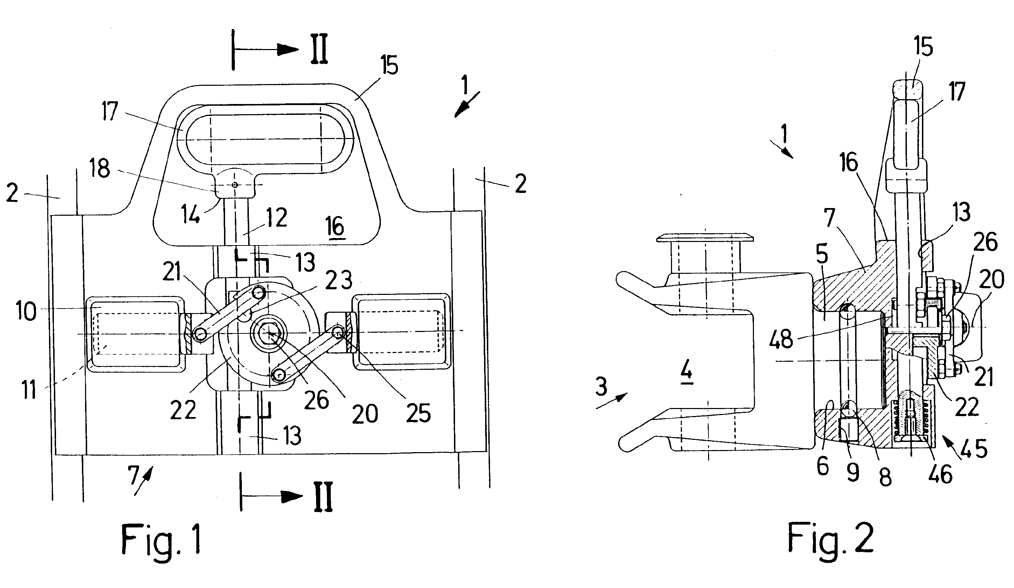

Die Fig. 1 und 2 zeigen eine höhenverstellbare Anhägevorrichtung 1 die in Führungselementen 2 (üblicherweise) an der Heckseite eines nicht dargestellten Fahrzeuges, beispielsweise eines landwirtschaftlichen Zugfahrzeuges wie Traktor, höhenverstellbar befestigt und an ihrer Rückseite mit einem sog. Zugmaul 3 als Kupplungsorgan versehen ist. Dieses Zugmaul 3 weist eine von einem sog. Stecknagel (nicht gezeigt) senkrecht durchdringbare Oeffnung 4 auf, in welcher die Anhängeöse einer Wagendeichsel aufliegt. Das Zugmaul 3 ist mittels eines Achsstummels 5 in einer Bohrung 6 der Tragplatte 7 der Anhängevorrichtung 1 um eine etwa horizontale Achse gelagert. Zur axialen Sicherung ist eine mit Kugeln 8 angereicherte, am Umfang des Achsstummels 5 und der Bohrung 6 gebildeten Kugelbahn versehen, die von aussen über eine verschliessbare Oeffnung 9 zugänglich ist. Anstelle von Kugeln könnte auch ein metallisches Kabel oder dgl. einge-führt werden.
Die nur andeutungsweise gezeichneten Führungselemente 2 sind beidseits der etwa in der Längsmittelachse des Zugfahrzeuges angeordneten Anhängevorrichtung 1, an einem einen Teil des Chassis bildenden Gehäuses mittels Schrauben befestigt, und weisen in senkrechter Richtung verlaufende Führungsnuten auf, in denen die bewegbare Tragplatte 7 in Stufen verstellt und festgestellt werden kann. Zu diesem Zweck sind Verankerungsbohrungen in den Führungselementen 2 vorgesehen, in die die in Lagern 10 an der Tragplatte 7 geführten Sperrbolzen verriegelnd einführbar sind.
Als Betätigungsorgan der Sperrbolzen 11 ist eine mit diesen mittelbar verbundene Antriebsstange 12 vorgesehen, die in einer Führung 13 an der Tragplatte 7 in senkrechter Richtung bewegbar ist, derart, dass die Antriebsstange 12 in einer oberen und in einer unteren Stellung arretierbar ist. D.h., dass die Antriebsstange 12 in einer dieser Stellungen nur durch eine dazu notwendige Betätigung wieder ausgelöst werden kann.
Diese prinzipielle Ausführungsform ermöglicht es, dass die Sperrbolzen 11 beispielsweise in der oberen Stellung der Antriebsstange 12 von den Verankerungsbohrungen der Führungselemente 2 entriegelt sind. Diese Absicht wirkt sich günstig auf die Bedienung der Anhängekupplung aus, weil durch die Zugbewegung der Antriebsstange die Reibung der Sperrbolzen 11 in den Verankerungsbohrungen der Führungselemente 2 minimalisiert und die Verstellung der Tragplatte 7 erleichtert wird.
Soll die Tragplatte 7 in den Führungselementen 2 durch Druck auf die Antriebsstange 12 entriegelt werden, dann entsteht durch die aufgewendete Kraft eine zusätzliche Reibung auf die Sperrbolzen 11 und bei Entriegelung letzterer eine Beschleunigungskraft nach unten, sodass die Tragplatte 7 nur mit erhöhter Anstrengung aufgefangen werden kann.
Um die Tragplatte 7 in ihrer oberen oder unteren Stellung arretieren zu können, ist beispielsweise eine formschlüssige Verriegelung mit einem in eine Ringnut an der Antriebsstange 12 einlegbaren Riegel (nicht veranschaulicht) oder eine an die Tragplatte 7 anlegbare Schulter 14 an der Antriebsstange 12 vorgesehen. Diese Angaben sind ausreichend, um die eine Arretierungsmöglichkeit der Antriebsstange 12 zu verstehen. Als zweckmässig erweist sich zur Arretierung der durch Ziehen der Antriebsstange 12 entriegelten Sperrbolzen 11 ein als Haltevorrichtung über der Tragplatte 7 angeordneter Haltebügel 15, der die Bedienungsperson bei einer Veränderung der Anhängevorrichtung 1 umfasst. Dieser Haltebügel 15 ist an der Tragplatte 7 befestigt und sein Abstand von der Tragplatte 7 beträgt etwa das Mass der Betätigungsstrecke der Antriebsstange 12, d.h. wenn diese die obere Stellung erreicht hat, steht sie an der Unterseite des Haltebügels 15 an. Zur Einsparung an Material und Bauhöhe der Tragplatte 7, ist diese unterhalb des Haltebügels 15, der sich seitlich von der Oberseite der Tragplatte 7 über letztere erstreckt, mit einer Ausnehmung 16 versehen, um die geführte Höhe der Tragplatte 7 bezüglich Festigkeit erhalten zu können. Am oberen Ende der Antriebsstange 12 ist ein Betätigungsgriff 17 angebracht, der eine ovale Form zum Durchgreifen der Hand aufweist und mit seinem Verbindungsteil 18 an der Antriebsstange 12 durch Schulter 14 die untere Arretierungsstellung bildet.

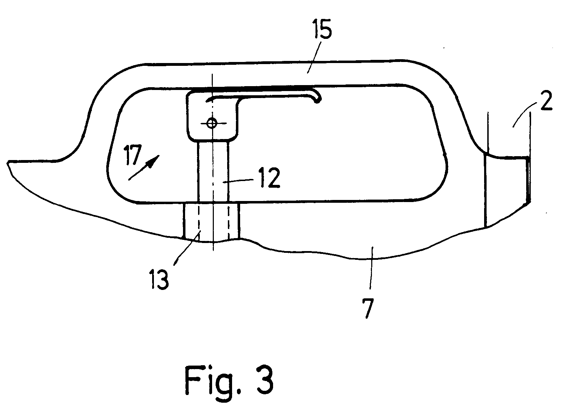

Fig. 3 zeigt eine andere Form des Betätigungsgriffes 17, der zum Zwecke einer Verbesserung der Handhabung der Anhängevorrichtung 1 wie eine Klinke, ein Fallenelement oder ein Hebel 19, einarmig und kürzer als die Grifflänge an dem Haltebügel 15 ausgebildet ist. Diese Massnahme dient einer reibungslosen Verstellung der Tragplatte 7, wobei zur Verriegelung bei Erreichen der gewünschten Höhe des Kupplungsorgans 3 der Betätigungsgriff 17 aus seiner Halteposition befreit werden muss, ohne dass die Tragplatte 7 vom Bedienenden losgelassen wird, sondern nur gerade in die zu erreichende Stellung versetzt wird.

Ist die Entriegelung der Sperrbolzen 11 durch Drücken der Antriebsstange 12 vorzunehmen, dann hat letztere wenigstens annähernd über den Haltebügel 15 hinaus die Länge der Betätigungsstrecke aufzuweisen.

Dieses schubartige Betätigungsprinzip hat dem bekannten höhenverstellbaren Anhängevorrichtungen gegenüber den wesentlichen und entscheidenden Vorteil, dass der Verstell- und Feststellvorgang mit einer Bedienungshand erfolgen kann, d.h. dass bei der nicht ungefährlichen Manipulierarbeit die Bedienungsperson sich mit der anderen Hand an einem feststehenden oder tragenden Teil festhalten oder abstützen kann.

Zur Auslösung oder als Zwischenglied zur Uebertragung der Betätigungskraft durch die Antriebsstange 12 sind verschiedene, in Verbindung mit der erfindungsgemässen Lösung verwendbare Antriebsmechanismen verwendbar.

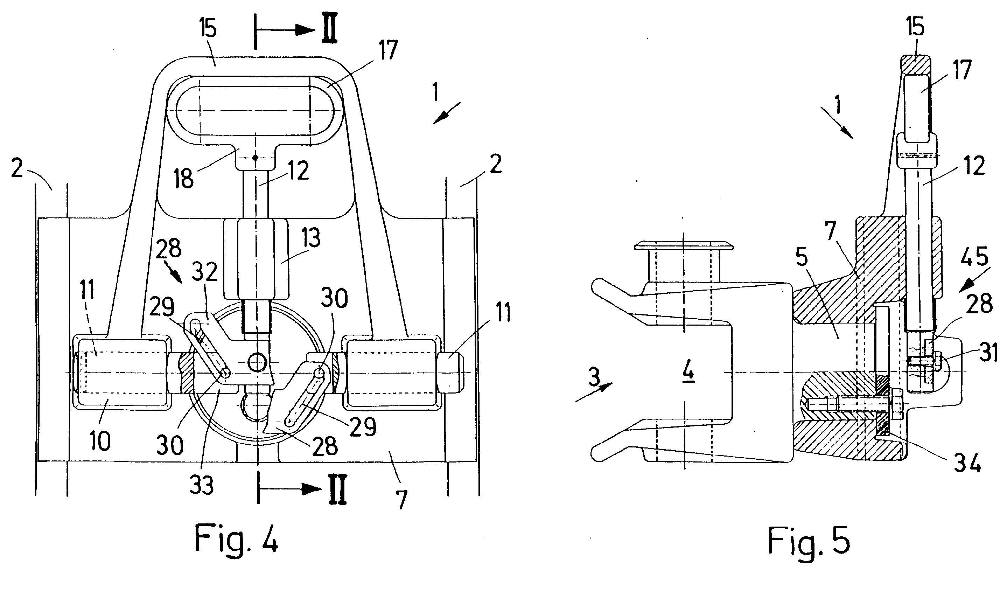

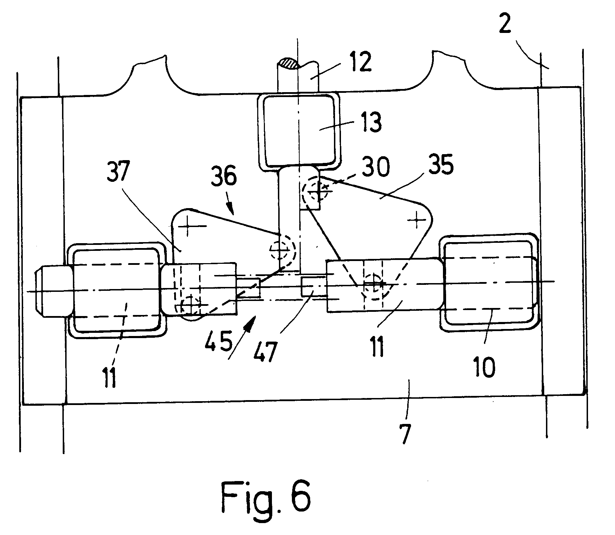

Bei einem ersten ist gemäss den Fig. 1 und 2 die Antriebsstange 12 mit einer um eine in Fahrtrichtung angeordneten, horizontalen Achse 20 drehbaren, die Sperrbolzen 11 mittels Lenkern 21 antreibenden Scheibe 22 verbunden. Diese Scheibe 22 weist eine schlitzartige Ausnehmung 23 auf, in welche ein mit der Antriebsstange 12 verbundener Antriebsnocken 24 eingreift. Durch Betätigung der Antriebsstange 12 kann so die Scheibe 22 in Drehung versetzt werden. Da sich der Antriebsnocken 24 auf einer Senkrechten bewegt und die Scheibe 22 sich dreht, ist die Ausnehmung 23 schlitzförmig, idealerweise radial auszuführen. In der dargestellten Ausführungsform ist der Radialabstand der Anlenkstelle der Lenker 21 an der Scheibe 22 von der Drehachse 20 der Scheibe 22 grösser als der Radialabstand der Ausnehmung 23 des Antriebsnockens 24 an der Scheibe 22 von der Drehachse 20 der Scheibe 22. Da sich die Anlenkenden der Lenker 21 an den Sperrbolzen 11 in der Verriegelungsstellung der Sperrbolzen 11 innerhalb ihrer Lager 10 befinden, sind die Sperrbolzen 11 an dem der Scheibe 22 zugewandten Ende mit schlitzartigen Oeffnungen versehen, in denen die Lenker 21 sperrbolzenseitig gelagert sind. Als Schwenklager dient eine Welle 25, die fest in den Sperrbolzen 11 sitzt.
Um die Scheibe 22 in Drehung versetzen zu können, ist die rechtwinklig zur Achse der Antriebsstange 12 in der Tragplatte 7 eingesetzte Drehachse 20 der Scheibe 22 zu ersterer seitlich versetzt angeordnet. Diese Anordnungsweise erlaubt eine günstige Auslegung der Tragplatte 7 und der daran befestigten Teile, wobei nicht zuletzt die etwa mittige Lagerung der Scheibe 22 zu einer kompakten Lösung beiträgt. Die Scheibe 22 selbst ist mittels einer Schraube 26, die als stationäre Welle ausgebildet ist, an der Tragplatte 7 fixiert und die Gesamtdicke der Scheibe 22 mit einem Bund ist kürzer, als die Länge der in der Scheibe 22 eingesetzten Gleitlagerbüchse 27, die durch die Schraube 26 festgehalten wird.
Alternativ zeigen die Fig. 4 und 5 eine mit der Antriebsstange 12 verbundene Steuerplatte 28, die V-förmige Führüngsnuten oder Führungsschlitze 29 besitzt, in welche Mitnehmerbolzen 30 der Sperrbolzen 11 eingreifen. Links der senkrechten Mittellinie sind die Sperrbolzen 11 in der entriegelten Stellung gezeichnet, während rechts von dieser Mittellinie die Sperrbolzen 11 in der Verankerungsstellung gezeichnet sind. Die Steuerplatte 28 ist durch eine Schraube 31 an dem unteren Ende der Antriebsstange 12 befestigt und greift mit den die Führungsnuten 29 aufweisenden Schenkeln 32 in die mit Schlitzen 33 versehenen Enden der Sperrbolzen 11 ein. Diese Ausführungsform bietet dadurch, dass das obere Ende der V-förmigen Führungsnuten oder -schlitze 29 durch parallel zu der Bewegungsrichtung der Antriebsstange 12 verlaufende Enden ausgebildet ist die Möglichkeit, die Sperrbolzen 11 in den Verankerungsbohrungen der Führungselemente 2 zu sichern. Selbstverständlich ist es möglich, die Führungsnuten oder -schlitze 29 nach unten divergierend anzuordnen und durch Hochziehen der Antriebsstange 12 die Sperrbolzen 11 in den Führungselementen zu verriegeln. Im Unterschied zu den Fig. 1 und 2 ist in den Fig. 4 und 5 das Kupplungsorgan 3 durch eine mit der Stirnseite des Achsstummels 5 verschraubte grössere Rückhalteplatte 34 in der Tragplatte 7 befestigt.

Fig. 6 vermittelt eine weitere Ausführungsform, die Sperrbolzen 11 zu ihrem Gebrauch mit der Antriebsstange 12 anzutreiben, wobei letztere jeweils mit dem freien Ende des einen Hebelarms 35 eines abgewinkelten, um eine in Fahrtrichtung angeordneten Achse schwenkbar gelagerten Hebels 36 und das freie Ende des anderen Hebelarms 37 mit dem Sperrbolzen 11 gekoppelt ist. Die Schwenklagerung der Hebel 36 befindet sich seitlich er Antriebsstange 12 über den Sperrbolzen 11. In der Fig. 6 ist wiederum links der senkrechten Mittellinie diejenige Stellung der Antriebsstange 12 offenbart, in der die Tragplatte 7 verriegelt ist, rechts der Mittellinie sind die Sperrbolzen 11 in zurückgezogener Stellung gezeigt, in welcher die Tragplatte 7 verstellbar ist. Als Verbindung von den Hebelarmen 35 zu der Antriebsstange 12 sind Mitnehmerbolzen 30 vorgesehen, die in die Antriebsstange 12 eingreifen. Der von den Hebelarmen 35, 37 eingeschlossene Winkel beträgt ca. 90°. Zur Koppelung der Hebelarme 37 mit den Sperrbolzen 11 ist eine formschlüssige Verbindung vorgesehen, beispielsweise Zapfen und Nut wahlweise an den betroffenen Teilen.

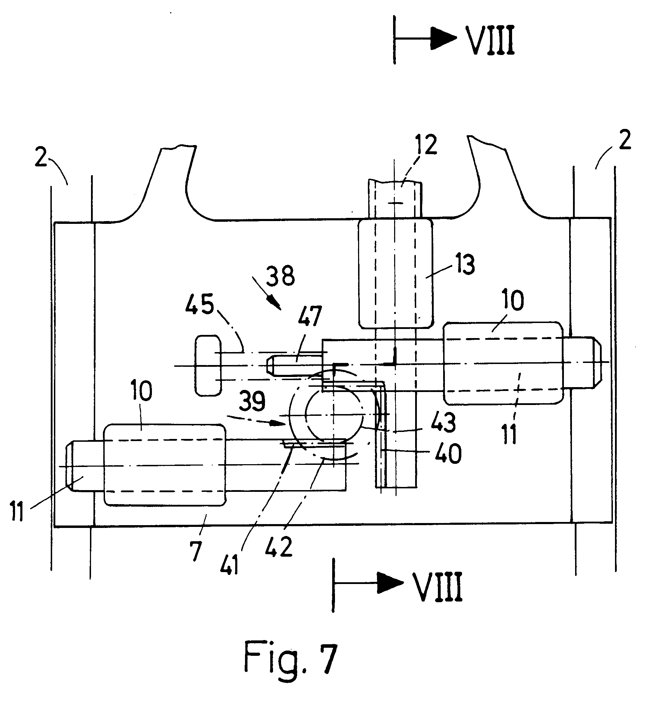

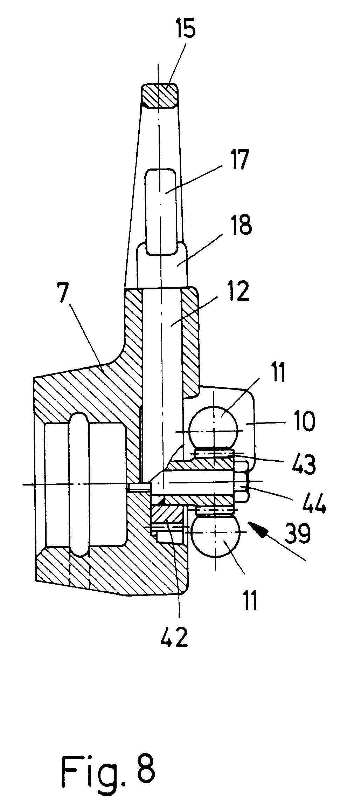

Die Fig. 7 und 8 zeigen einen Antriebsmechanismus zwischen Antriebsstange 12 und Sperrbolzen 11, der als Zahnstangengetriebe 38 ausgebildet ist. Dieser Zahnstangenantrieb weist ein Antriebsrad 39 auf, das einerseits mit einer an der Antriebsstange 12 vorgesehenen Zahnstange 40 und andererseits mit Zahnsstangen 41 an den Sperrbolzen 11 kämmt. In der dargestellten Stellung sind die Sperrbolzen 11 in den Verankerungsbohrungen und die Antriebsstange 12 befindet sich in der unteren Stellung. Bezüglich Antriebsstange 12 sind in Draufsicht betrachtet (siehe Fig. 8) die Sperrbolzen 11 in Fahrtrichtung versetzt in Lagern 10 angeordnet. Jeweils einer der Sperrbolzen 11 befindet sich über dem Antriebsrad 39 um wenigstens annähernd das Mass des Teilkreisdurchmessers des Antriebsrades zum anderen Sperrbolzen 11 versetzt. An den dem Anstriebsrad 39 zugewendeten Enden sind die Sperrbolzen 11 mit verzahnten (als Zahnstange) Fortsätzen 41 versehen. Im dargestellten Beispiel besteht das Antriebsrad 39 aus zwei miteinander verbundenen Zahnrädern 42, 43, von denen das eine 42 im Sinne einer Untersetzung des Arbeitsweges mit der Antriebsstange 12 und das andere 43 mit den Fortsätzen 41 der Sperrbolzen 11 kämmt. Selbstverständlich ist auch ein Verhältnis der Teikreisdurchmesser der Zahnräder 42, 43 zur Erzielung einer Uebersetzung anwendbar. Die Lagerung des Antriebsrades 39 erfolgt durch eine Schaftschraube 44, deren Schaftlänge grösser ist als die Breite des Antriebsrades 39 bzw. beider Zahnräder 42, 43. Die Antriebsvariante könnte mit der Antriebsstange 12 und der Antriebsscheibe 22 gemäss den Fig. 1 und 2 kombiniert werden.

Alle diese Antriebsmechanismen können mittels einer auf die Betätigungskraft einwirkenden Rückstellkraft erfolgen, wobei dazu eine druckbelastbare Feder 45 vorzusehen ist.
Bei der Ausführungsform nach den Fig. 1 und 2 kann beispielsweise eine an dem freien Ende der Antriebsstange 12 vorgesehene Schulter 46 und das untere Ende der Tragplatte 7 bzw. eine erweiterte Bohrung zur Anbringung einer Druckfeder 45 entsprechend ausgebildet werden.
Selbstverständlich erfüllt die direkte Federbeaufschlagung der Sperrbolzen 11 den gleichen Zweck. Dazu eignen sich auch zapfenartige Federführungen 47.
Eine formschlüssige Führung 48 der Antriebsstange 12 in der Tragplatte 7 begünstigt die Stabilität des Sperrbolzenantriebes.

## Patentansprüche

1. Anhängevorrichtung für Fahrzeuge mit einem höhenverstellbaren Kupplungsorgan (3), das an einer seitlich in einer aus Führungselementen (2) gebildeten Führungsanordnung senkrecht bewegbaren Tragplatte (7) befestigt und mittels in Lagern (10) seitlich verschiebbaren Sperrbolzen (11) verriegelbar ist, wobei die Sperrbolzen (11) in einer Verriegelungsstellung der Tragplatte (7) in eine in den Führungselementen (2)vorgesehene Verankerungsbohrung hineinragen und in der Verstellposition der Tragplatte (7) die Sperrbolzen (11) aus den Verankerungsbohrungen herausgezogen sind, dass als Betätigungsorgan der Sperrbolzen (11) eine mit diesen mittelbar verbundene Antriebsstange (12) vorgesehen ist, die an der Tragplatte (7) in senkrechter Richtung bewegbar und entgegen einer Rückstellkraft in einer oberen und in einer unteren Stellung arretierbar ausgebildet ist, wobei über der Tragplatte (7) ein mit dieser verbundener Haltebügel (15) vorgesehen ist, dadurch gekennzeichnet, dass die Unterseite des Haltebügels (15) einen Endanschlag der Antriebsstange (12) bildet, die an ihrem oberen Ende einen seitlich von der Antriebsstange (12) sich erstrekkenden Betätigungsgriff (17) aufweist, welcher kürzer als die Grifflänge des Haltebügels (15) ausgebildet ist.

2. Anhängevorrichtung nach Anspruch 1, dadurch gekennzeichnet, dass die als Betätigungsorgan vorgesehene Antriebsstange (12) mit einer um eine horizontale Achse drehbaren, die Sperrbolzen (11) mittels Lenkern (21) antreibenden Scheibe (22) verbunden ist.

3. Anhängevorrichtung nach Anspruch 2, dadurch gekennzeichnet, dass die Antriebsstange (12) einen in eine an der Scheibe (22) vorgesehenen schlitzartige Ausnehmung (23) eingreifenden Antriebsnocken (24) aufweist.

4. Anhängevorrichtung nach einem der Ansprüche 2 und 3, dadurch gekennzeichnet, dass der Radialabstand der Anlenkstelle der Lenker (21) an der Scheibe (22) von der Drehachse (20) der Scheibe (22) grösser ist als der Radialabstand der Ausnehmung (23) des Antriebsnockens (24) an der Scheibe (22) von der Drehachse(20) der Scheibe (22).

5. Anhängevorrichtung nach einem der Ansprüche 2 bis 4, dadurch gekennzeichnet, dass die Sperrbolzen (11) an dem der Scheibe (22) zugewandten Ende schlitzartige Oeffnungen aufweisen, in denen die Lenker (21) einenends gelagert sind.

6. Anhängevorrichtung nach einem der Ansprüche 2 bis 5, dadurch gekennzeichnet, dass die rechtwinklig zur Achse der Antriebsstange (12) vorgesehene Drehachse (20) der Scheibe (22) zu ersterer seitlich versetzt angeordnet ist.

7. Anhängevorrichtung nach einem der Ansprüche 2 bis 6, dadurch gekennzeichnet, dass die Drehachse (20) der Scheibe (22) wenigstens annähernd mittig in der Quererstreckung der Tragplatte (7) angeordnet ist.

8. Anhängevorrichtung nach einem der Ansprüche 2 bis 7, dadurch gekennzeichnet, dass zur Lagerung der Scheibe (22) eine letztere bezüglich Bohrungslänge übertreffende Lagerbüchse (27) vorgesehen ist.

9. Anhängevorrichtung nach Anspruch 1, dadurch gekennzeichnet, dass die als Betätigungsorgan ausgebildete Antriebsstange (12) mit einer V-förmig verlaufende Führungsnuten oder -schlitze (29) aufweisenden und mit den Sperrbolzen (11) antriebsverbundenen Steuerplatte (28) gekoppelt ist.

10. Anhängevorrichtung nach Anspruch 9, dadurch gekennzeichnet, dass in die Führungsnuten oder -schlitze (29) die Sperrbolzen (11) rechtwinklig zu ihrer Bewegungsrichtung durchdringende Mitnehmerbolzen (30) eingreifen.

11. Anhängevorrichtung nach einem der Ansprüche 9 und 10, dadurch gekennzeichnet, dass das obere Ende der V-förmigen Führungsnuten oder -schlitze (29) parallel zu der Bewegungsrichtung der Antriebsstange (12) verläuft.

12. Anhängevorrichtung nach einem der Ansprüche 9 bis 11, dadurch gekennzeichnet, dass die Führungsnuten oder -schlitze (29) nach unten divergierend in der Steuerplatte (28) angeordnet sind.

13. Anhängevorrichtung nach Anspruch 1, dadurch gekennzeichnet, dass die als Betätigungsorgan vorgesehene Antriebsstange (12) jeweils mit dem freien Ende des einen Hebelarmes (35) eines abgewinkelten, schwenkbar gelagerten Hebels (36) und das freie Ende des anderen Hebelarmes (37) mit dem Sperrbolzen (11) gekoppelt ist.

14. Anhängevorrichtung nach Anspruch 13, dadurch gekennzeichnet, dass die Hebelarme (35, 37) eines Hebels (36) einen etwa rechten Winkel bilden.

15. Anhängevorrichtung nach einem der Ansprüche 13 und 14, dadurch gekennzeichnet, dass die Hebel (36) oberhalb der Sperrbolzen (11) gelagert sind.

16. Anhängevorrichtung nach Anspruch 1, dadurch gekennzeichnet, dass die als Betätigungsorgan vorgesehene Antriebsstange (12) durch ein mit den Sperrbolzen (11) verbundenes Zahnstangengetriebe (38) gekoppelt ist.

17. Anhängevorrichtung nach Anspruch 16, dadurch gekennzeichnet, dass die Antriebsstange (12) mit wenigstens einem um eine horizontale Achse gelagerten Antriebsrad (39) kämmt, welches in Zahnstangen (39) der Sperrbolzen (11) eingreift.

18. Anhängevorrichtung nach einem der Ansprüche 16 und 17, dadurch gekennzeichnet, dass die Sperrbolzen (11) in Draufsicht betrachtet von der Antriebsstange (12) beabstandet angeordnet sind.

19. Anhängevorrichtung nach einem der Ansprüche 16 bis 18, dadurch gekennzeichnet, dass die Sperrbolzen (11) bezüglich ihrer Höhenlage um wenigstens annähernd das Mass des Teilkreisdurchmessers des Antriebsrades (39) gegenseitig versetzt angeordnet sind.

20. Anhängevorrichtung nach einem der Ansprüche 16 bis 19, dadurch gekennzeichnet, dass die Sperrbolzen (11) nach innen gerichtete verzahnte Fortsätze (41) aufweisen.

21. Anhängevorrichtung nach einem der Ansprüche 16 bis 19, dadurch gekennzeichnet, dass das Antriebsrad (39) zwei benachbarte Zahnräder (42, 43) unterschiedlicher Teilkreisdurchmesser aufweist.

22. Anhängevorrichtung nach einem der Ansprüche 16 und 17 bis 31, dadurch gekennzeichnet, dass das mit den verzahnten Fortsätzen (41) der Sperrbolzen (11) antriebsverbundene Zahnrad (43) mit einer koaxial angeordneten, durch die Antriebsstange (12) betätigbaren Antriebsscheibe (22) drehfest verbunden ist.

23. Anhängevorrichtung nach einem der Ansprüche 1 bis 22, dadurch gekennzeichnet, dass zur Bildung einer auf das Betätigungsorgan (12) einwirkenden Rückstellkraft eine druckbelastete Feder(45) vorgesehen ist.

24. Anhängevorrichtung nach einem der Ansprüche 1 bis 23, dadurch gekennzeichnet, dass wenigstens einer der Sperrbolzen (11) von einer Druckfeder (45) beaufschlagt ist.

25. Anhängevorrichtung nach Anspruch 24, dadurch gekennzeichnet, dass die den zur Verankerung vorgesehenen Enden gegenüberliegenden Enden der Sperrbolzen (11) mit zapfenartigen Federführungen (47) ausgebildet sind.

26. Anhängevorrichtung nach einem der Ansprüche 1 bis 25, dadurch gekennzeichnet, dass die Antriebsstange (12) in der Tragplatte (7) formschlüssig geführt ausgebildet ist.

27. Anhängevorrichtung nach einem der Ansprüche 1 bis 26, dadurch gekennzeichnet, dass das die Antriebstange (12) mit den Sperrbolzen (11) verbindende Zwischengelege mit einer an der Tragplatte (7) befestigten Abdeckhaube versehen ist.

28. Anhängevorrichtung nach einem der Ansprüche 1 bis 27, dadurch gekennzeichnet, dass das Betätigungsorgan mit einer einfach- oder doppelwirkenden Kolben - Zylinder - Einheit antriebsverbunden ist.

29. Anhängevorrichtung nach Anspruch 28, dadurch gekennzeichnet, dass die Kolben - Zylinder - Einheit an der Oberseite der Tragplatte befestigt ist.

30. Anhängevorrichtung nach einem der Ansprüche 28 und 29, dadurch gekennzeichnet, dass in den das Druckmedium mit der Kolben - Zylinder - Einheit verbindenden Leitungen ein steuerbares Wegeventil angeordnet ist.

## Claims

1. Trailerhitch for vehicles with a vertically adjustable coupling member (3) which is secured to a support plate (7) which can be moved vertically and laterally in a guide arrangement formed by guide elements (2) and can be locked by means of locking pins (11) which are displaceable laterally in bearings (10), the locking pins (11) projecting into an anchoring bore provided in the guide elements (2) in a locking position of the support plate (7) and the locking pins (11) being removed from the anchoring bores in the adjusting position of the support plate (7), a driving rod (12) directly connected to the locking pins (11) being provided as an actuating member therefor and being designed so that it can be moved in the vertical direction on the support plate (7) and can be locked against a restoring force in an upper and a lower position, a holding bracket (15) being provided above the support plate (7) and connected thereto, characterised in that the underside of the holding bracket (15) forms an end stop for the driving rod (12), which at its upper end has an actuating handle (17) extending laterally of the driving rod (12) and designed to be shorter than the handle length of the holding bracket (15).

2. Trailerhitch according to claim 1, characterised in that the driving rod (12) provided as an actuating member is connected to a pulley (22) which can rotate about a horizontal axis and drives the locking pins (11) by means of links (21).

3. Trailerhitch according to claim 2, characterised in that the driving rod (12) has an actuating cam (24) engaging a slotted recess (23) provided on the pulley (22).

4. Trailerhitch according to one of claims 2 and 3, characterised in that the radial distance between the pivotal point of the links (21) on the pulley (22) and the pivot axis (20) of the pulley (22) is greater than the radial distance between the recess (23) of the actuating cam (24) on the pulley (22) and the pivot axis (20) of the pulley (22).

5. Trailerhitch according to one of claims 2 to 4, characterised in that the locking pins (11) have slotted openings at the ends directed towards the pulley (22) in which the links (21) are supported at one end.

6. Trailerhitch according to one of claims 2 to 5, characterised in that the pivot axis (20) of the pulley (22) provided at right angles to the axis of the driving rod (12) is arranged so that it is offset laterally with respect to the latter.

7. Trailerhitch according to one of claims 2 to 6, characterised in that the pivot axis (20) of the pulley (22) is arranged at least approximately centrally in the transverse extent of the support plate (7).

8. Trailerhitch according to one of claims 2 to 7, characterised in that a bearing bush (27) is provided for supporting the pulley (22) and has a greater bore length than the latter.

9. Trailerhitch according to claim 1, characterised in that the driving rod (12) designed as an actuating member is coupled to a control plate (28) having V-shaped guide grooves or slots (29) and operatively connected to the locking pins (11).

10. Trailerhitch according to claim 9, characterised in that driving pins (30) traversing the locking pins (11) at right angles to their direction of movement engage the guide grooves or slots (29).

11. Trailerhitch according to one of claims 9 and 10, characterised in that the upper end of the V-shaped guide grooves or slots (29) extends parallel to the direction of movement of the driving rod (12).

12. Trailerhitch according to one of claims 9 to 11, characterised in that the guide grooves or slots (29) are arranged so that they diverge downwards in the control plate (28).

13. Trailerhitch according to claim 1, characterised in that the driving rod (12) provided as an actuating member is coupled to the free end of one lever arm (35) of an angled, pivotally mounted lever (36) and the free end of the other lever arm (37) is coupled to the locking pin (11).

14. Trailerhitch according to claim 13, characterised in that the lever arms (35, 37) of a lever (36) substantially form a right angle.

15. Trailerhitch according to one of claims 13 and 14, characterised in that the lever (36) is mounted above the locking pins (11).

16. Trailerhitch according to claim 1, characterised in that the driving rod (12) provided as an actuating member is coupled by means of a rack-and-pinion gear (38) connected to the locking pins (11).

17. Trailerhitch according to claim 16, characterised in that the driving rod (12) meshes with at least one driving gear (39) which is mounted about a horizontal axis and engages gear racks (39) of the locking pins (11).

18. Trailerhitch according to one of claims 16 and 17, characterised in that the locking pins (11) are arranged at a distance from the driving rod (12) when viewed from the top.

19. Trailerhitch according to one of claims 16 to 18, characterised in that the locking pins (11) are arranged so that they are mutually offset with respect to their height by at least approximately the magnitude of the pitch diameter of the driving gear (39).

20. Trailerhitch according to one of claims 16 to 19, characterised in that the locking pins (11) have inwardly directed toothed extensions (41).

21. Trailerhitch according to one of claims 16 to 19, characterised in that the driving gear (39) has two adjacent gears (42, 43) with different pitch diameters.

22. Trailerhitch according to one of claims 16 and 17 to 31, characterised in that the gear (43) operatively connected to the toothed extensions (41) of the locking pins (11) is splined to a coaxially arranged driving pulley (22) actuated by the driving rod (12).

23. Trailerhitch according to one of claims 1 to 22, characterised in that a compression spring (45) is provided to form a restoring force acting on the actuating member (12).

24. Trailerhitch according to one of claims 1 to 23, characterised in that at least one of the locking pins (11) is acted upon by a compression spring (45).

25. Trailerhitch according to claim 24, characterised in that the ends of the locking pins (11) opposite the ends provided for anchoring are designed with conical spring guides (47).

26. Trailerhitch according to one of claims 1 to 25, characterised in that the driving rod (12) is designed to be positively guided in the support plate (7).

27. Trailerhitch according to one of claims 1 to 26, characterised in that the intermediate element connecting the driving rod (12) to the locking pins (11) is provided with a covering cap secured to the support plate (7).

28. Trailerhitch according to one of claims 1 to 27, characterised in that the actuating member is operatively connected to a single- or double-acting piston/cylinder unit.

29. Trailerhitch according to claim 28, characterised in that the piston/cylinder unit is secured to the surface of the support plate.

30. Trailerhitch according to one of claims 28 and 29, characterised in that a controllable directional control valve is arranged in the lines connecting the pressure medium to the piston/cylinder unit.

## Revendications

1. Attelage pour véhicules avec un organe d'accouplement (3) réglable en hauteur qui est fixé sur une plaque d'appui (7) pouvant être déplacée verticalement dans une disposition de guidage formée sur le côté par des éléments de guidage (2) et qui peut être bloqué au moyen de boulons de blocage (11) pouvant être déplacés latéralement dans des paliers (10), les boulons de blocage (11) s'encastrant dans un perçage de blocage prévu dans les éléments de guidage (2) lorsque la plaque d'appui (7) est dans une position de blocage et étant sortis des perçages de blocage lorsque la plaque d'appui (7) est en position de réglage, une barre de commande (12) servant d'organe de manoeuvre pour les boulons de blocage (11) et reliée directement à ceux-ci étant prévue, laquelle peut se déplacer verticalement sur la plaque d'appui (7) et peut être bloquée dans une position supérieure et inférieure contre une force de rappel, un étrier de retenue (15) relié à la plaque d'appui (7) étant prévu au-dessus de celle-ci, caractérisé en ce que la face inférieure de l'étrier de retenue (15) forme une butée de fin de course de la barre de commande (12) qui présente à son extrémité supérieure une poignée de manoeuvre (17) partant latéralement de la barre de commande (12) et plus courte que la longueur de poignée de l'étrier de retenue (15).

2. Attelage selon la revendication 1, caractérisé en ce que la barre de commande (12) prévue en tant qu'organe de manoeuvre est reliée à un disque (22) tournant autour d'un axe horizontal et entraînant les boulons de blocage (11) au moyen de bielles (21).

3. Attelage selon la revendication 2, caractérisé en ce que la barre de commande (12) présente une came de commande (24) logée dans une ouverture (23) en forme de fente prévue sur le disque (22).

4. Attelage selon l'une des revendications 2 ou 3, caractérisé en ce que l'écart radial entre le point d'articulation des bielles (21) sur le disque (22) et l'axe de rotation (20) du disque (22) est plus grand que l'écart radial entre l'ouverture (23) de la came de commande (24) sur le disque (22) et l'axe de rotation (20) du disque (22).

5. Attelage selon l'une des revendications 2 à 4, caractérisé en ce que les boulons de blocage (11) présentent à l'extrémité tournée vers le disque (22) des ouvertures en forme de fente dans lesquelles sont logées les bielles (21) par une de leurs extrémités.

6. Attelage selon l'une des revendications 2 à 5, caractérisé en ce que l'axe de rotation (20) du disque (22) prévu perpendiculairement à l'axe de la barre de commande (12) est décalé latéralement par rapport à ce dernier.

7. Attelage selon l'une des revendications 2 à 6, caractérisé en ce que l'axe de rotation (20) du disque (22) est disposé au moins approximativement au milieu de la largeur de la plaque d'appui (7).

8. Attelage selon l'une des revendications 2 à 7, caractérisé en ce qu'un coussinet (27) dépassant le disque du point de vue de la longueur des perçages est prévu pour fixer le disque (22).

9. Attelage selon la revendication 1, caractérisé en ce que la barre de commande (12) réalisée sous forme d'organe de manoeuvre est couplée avec une plaque de commande (28) s'étendant en forme de V, présentant des rainures ou des fentes de guidage (29) et reliée aux boulons de blocage (11) de manière à les commander.

10. Attelage selon la revendication 9, caractérisé en ce que des boulons d'entraînement (30) traversant les boulons de blocage (11) perpendiculairement à leur sens de déplacement s'engrènent dans les rainures ou les fentes de guidage (29).

11. Attelage selon l'une des revendications 9 et 10, caractérisé en ce que l'extrémité supérieure des rainures ou des fentes de guidage (29) en forme de V s'étend parallèlement au sens de déplacement de la barre de commande (12).

12. Attelage selon l'une des revendications 9 à 11, caractérisé en ce que les rainures ou les fentes de guidage (29) sont disposées dans la plaque de commande (28) de manière à diverger vers le bas.

13. Attelage selon la revendication 1, caractérisé en ce que la barre de commande (12) prévue en tant qu'organe de manoeuvre est chaque fois couplée avec l'extrémité libre de l'un des bras de levier (35) d'un levier (36) coudé monté de manière pivotante et en ce que l'extrémité libre de l'autre bras de levier (37) est couplée avec le boulon de blocage (11).

14. Attelage selon la revendication 13, caractérisé en ce que les bras de levier (35, 37) d'un levier (36) forment un angle approximativement droit.

15. Attelage selon l'une des revendications 13 et 14, caractérisé en ce que les leviers (36) sont montés au-dessus des boulons de blocage (11).

16. Attelage selon la revendication 1, caractérisé en ce que la barre de commande (12) prévue en tant qu'organe de manoeuvre est couplée avec un engrenage à crémaillère (38) relié aux boulons de blocage (11).

17. Attelage selon la revendication 16, caractérisé en ce que la barre de commande (12) s'engrène avec au moins une roue de commande (39) montée sur un axe horizontal, laquelle s'engrène dans des crémaillères (39) des boulons de blocage (11).

18. Attelage selon l'une des revendications 16 et 17, caractérisé en ce que, vus du dessus, les boulons de blocage (11) sont disposés avec un écart par rapport à la barre de commande (12).

19. Attelage selon l'une des revendications 16 à 18, caractérisé en ce que les boulons de blocage (11), du point de vue de leur position en hauteur, sont décalés l'un par rapport à l'autre d'au moins approximativement la mesure du diamètre primitif de la roue de commande (39).

20. Attelage selon l'une des revendications 16 à 19, caractérisé en ce que les boulons de blocage (11) présentent des prolongements (41) dentés tournés vers l'intérieur.

21. Attelage selon l'une des revendications 16 à 19, caractérisé en ce que la roue de commande (39) présente deux roues dentées (42, 43) adjacentes de diamètre primitif différent.

22. Attelage selon l'une des revendications 16 et 17 à 21, caractérisé en ce que la roue dentée (43) reliée aux prolongements (41) dentés des boulons de blocage (11) de manière à les entraîner est reliée de manière solidaire en rotation à un disque de commande (22) disposé coaxialement et pouvant être actionné par la barre de commande (12).

23. Attelage selon l'une des revendications 1 à 22, caractérisé en ce qu'un ressort (45) sous pression est prévu pour établir une force de rappel agissant sur l'organe de manoeuvre (12).

24. Attelage selon l'une des revendications 1 à 23, caractérisé en ce qu'au moins l'un des boulons de blocage (11) est assujetti à un ressort à pression (45).

25. Attelage selon la revendication 24, caractérisé en ce que les extrémités des boulons de blocage (11) opposées aux extrémités destinées à bloquer sont réalisées avec des coulisseaux pour ressort (47) semblables à des tourillons.

26. Attelage selon l'une des revendications 1 à 25, caractérisé en ce que la barre de commande (12) est réalisée de manière à être guidée avec un engagement positif dans la plaque d'appui (7).

27. Attelage selon l'une des revendications 1 à 26, caractérisé en ce que la partie intermédiaire reliant la barre de commande (12) aux boulons de blocage (11) est munie d'un capot fixé sur la plaque d'appui (7).

28. Attelage selon l'une des revendications 1 à 27, caractérisé en ce que l'organe de manoeuvre est relié à une unité de piston et cylindre à simple ou à double effet de manière à être commandé par celle-ci.

29. Attelage selon la revendication 28, caractérisé en ce que l'unité de piston et cylindre est fixée sur le dessus de la plaque d'appui.

30. Attelage selon l'une des revendications 28 et 29, caractérisé en ce qu'un distributeur pouvant être commandé est disposé dans les conduites menant le fluide sous pression à l'unité de piston et cylindre.
